# EUROPEAN PATENT APPLICATION

(11) **EP 2 656 938 A2**
(43) Date of publication of application: **30.10.2013**
(21) Application number: 13165096.2
(22) Date of filing: 24.04.2013
(51) Int. Cl.: B21D 22/14

(54) **Spinning method, spinning machine, and shaped component**

(30) Priority: 27.04.2012 JP 2012103210; 25.03.2013 JP 2013061235
(71) Applicant: Hitachi Ltd., Tokyo (JP)
(72) Inventor: Hong, YounJeong, Tokyo (JP); Sato, Toshimi, Tokyo (JP); Hirano, Kenichirou, Tokyo (JP); Makiyama, Takahiro, Tokyo (JP); Teramae Toshiya, Tokyo (JP); Ochiai, Yoshitaka, Tokyo (JP)
(74) Representative: Calderbank, Thomas Roger

(57) **Abstract**

In the present spinning method using elements including: a tube material (102); a pair of chucks (101a, 101b) which hold both ends of the tube material (102); and a roller (103) having a predetermined curved shape in order to shape the tube material (102), in a state that circumferential portions at the both ends of the tube material (102) are fitted in and held by circumferential grooves (104) provided on side surfaces of the chucks (101a, 101b), the method includes a step of transferring a curved shape on a side surface of the roller (103) to a side surface of the tube material (102) by rotating the chucks (101a, 101b) which hold the tube material (102) around a first axis (J1), rotating the roller (103) around a second axis (J2), moving the rotating roller (103) in an X direction, and pressing the side surface of the roller (103) against the side surface of the tube material (102) between the rotating chucks (101a, 101b).

## Description

The present invention relates to a spinning technique and others.

As prior art examples, there are Japanese Patent Application Laid-Open Publication No. S62-227520 (Patent Document 1), Japanese Patent No. 3455892 (Patent Document 2), and others.

The Patent Document 1 ("Method of Manufacturing Twist Deformed Tube") describes "to provide a method, without using a core bar, of manufacturing a twist tapered tube or straight tube having different cross-sectional surfaces, which is formed so as to have an appearance of a twisted tube body by spirally forming a waved or polyhedral pattern on a tube outer peripheral surface in a tube longitudinal direction", and describes "a method of manufacturing a twist deformed tube, in which a hollow cylindrical tube material is rolled while holding it at both ends and applying tensile force or compressing force thereto in an axial direction of the tube material, and besides, a shaping roll is moved in the axial direction of the tube material while pressing the shaping roll against the tube material, so that the tube material is shaped into a desired shape, with using a roll whose peripheral surface is formed into a waved shape or polyhedral shape as the shaping roll".

The Patent Document 2 ("Method of Manufacturing Step Rotating Body") describes to manufacture a step rotating body with a light weight, without distortion, with excellent concentricity, with a uniform thickness, and with good rotational balance. Also, it describes a method of manufacturing a step rotating body formed of a boss portion and a cylindrical portion which is integrally formed with the boss portion and which has a larger diameter than that of the boss portion, the method in which both ends of a thin tubular material are fitted in a cylindrical-portion die, are engaged therewith in a diameter-increasing direction, and are pressed in an axial direction to be held, a diameter of an axial-direction intermediate portion of this tubular material is decreased by a shaping roll so that the portion follows a boss-portion die provided between the above-described tubular-portion dies opposite to each other, and then, this diameter-decreased portion is cut in the middle thereof in the axial direction so as to use a part fitted in the cylindrical-portion die as the cylindrical portion and use a part fitted in the boss-portion die as the boss portion.

The above-described Patent Document 1 describes the method of shaping the tube material into the predetermined shape by, in spinning of the tube material which is a cylindrical raw tube, rotating the tube material supported at both ends thereof (supported by tensile force or compressing force) and moving the shaping roll (also referred to as a roller) thereon in the axial direction or longitudinal direction of the tube material while pressing the shaping roll against the tube material. In this method, the spinning is performed only with the roller without using a mandrel which is a die arranged inside the tube material or in a core in order to transfer the predetermined shape onto an outer surface of the tube material. Note that the mandrel (4) described in Patent Document 1 is described as an object for supporting the both ends of the tube material (1), and is not intended as the die which is arranged inside the above-described tube material or in the core in order to transfer the predetermined shape to the outer surface of the tube material.

However, the method as described in Patent Document 1 has a problem of reduction in working efficiency due to long processing time because the moving direction of the roller is the axial direction or longitudinal direction of the tube material.

The above-described Patent Document 2 describes the shaping method in the spinning of the tube material which is the cylindrical raw tube, by moving the roller in a radial direction of the tube material while pressing the roller against the axial-direction intermediate portion of the tube material. In this method, the processing or diameter-decreasing shaping is performed with taking the feeding direction of the roller as the radial direction of the tube material. However, the mandrel is introduced.

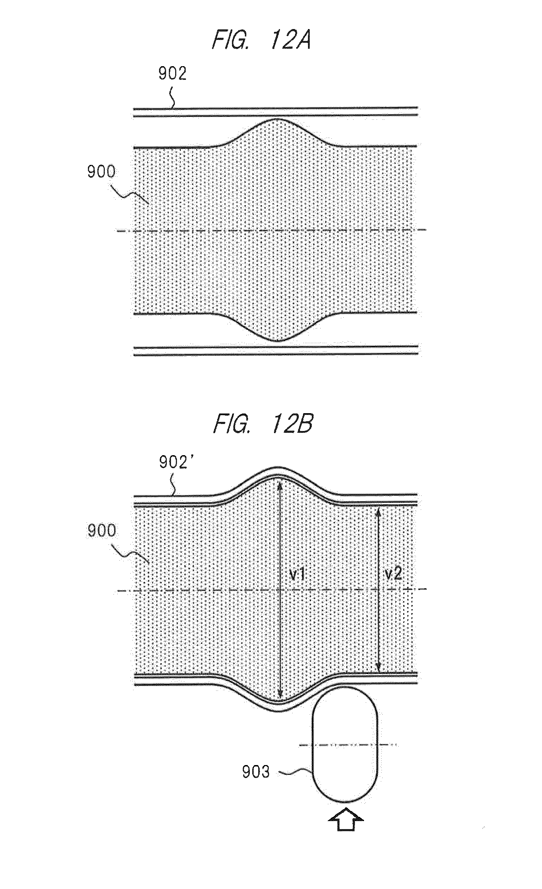

Therefore, the method as described in Patent Document 2 has a problem of reduction in production efficiency because a step and working of detaching the tube material from the mandrel is required subsequent to the shaping. Moreover, in the case of the method using the mandrel as described above, the shape of the tube material subsequent to the shaping is largely limited. For example, the processing cannot be performed for such a shape that the diameter of the portion against which the roller is pressed to be the center portion of the tube material in the rotation-axis direction is larger than the diameter of the other portion such as the vicinity of the both ends of the tube material. This is because the tube material subsequent to the shaping cannot be detached from the mandrel or because cutting of the tube material subsequent to the shaping or others is required (see FIG. 12 described later or others).

In consideration of the description above, a main preferred aim of the present invention for a method of spinning a tube (pipe) material is to provide a technique capable of improving working efficiency with short processing time, achieving a flexible processed shape, and improving production efficiency. More particularly, it is to provide a technique capable of achieving the above-described effects by employing a method of moving a roller in a radial direction of the tube material without using the mandrel which is a die arranged inside the tube material in order to transfer a shape.

A typical embodiment of the present invention is a method of spinning a tube material, a machine thereof, and others, and has a feature of a configuration described below.

The spinning method according to the present embodiment uses components including: a tube material; a pair of chucks which hold and rotate both ends of the tube material; and a roller which is a rotating symmetrical body having a predetermined curved shape on a side surface thereof in order to shape the tube material. A mandrel or others is not arranged inside the tube material. The present method provides a state that circumferential portions at the both ends of the tube material are fitted in and held by circumferential grooves provided on respective side surfaces of a pair of chucks facing each other. In the present method, the chucks holding the tube material are rotated around a first axis, and the roller is rotated around a second axis. The rotating axial directions of the first axis and the second axis are the same as each other as a first direction, and the radial direction thereof is a second direction. The present method includes a step of moving the rotating roller in the second direction and pressing a side surface of the roller against a side surface of the rotating tube material between the rotating chucks from outside, so that a curved shape of the side surface of the roller is transferred to the side surface of the tube material.

Moreover, in the present method, for example, in the first direction, when a width of the side surface of the roller is assumed as "P1" and a distance between the side surfaces of the pair of chucks facing each other where the side surface of the tube material exists is assumed as "Q1", a value of "P1/Q1" that is a ratio between them is larger than 0.9 but smaller than 1.0.

Moreover, in the present method, for example, a shape of the side surface of the roller is a concave curved shape which is concave in the second direction at a center thereof in the first direction, and a shape of the tube material or a tubular shaped component obtained subsequent to the shaping is formed into a portion having a convex curved shape which is convex in the second direction.

Moreover, in the present method, for example, each width of the grooves provided on the side surfaces of the chucks is designed to have a length obtained by addition of a thickness of an end portion of the tube material and a processing tolerance, and the processing tolerance is designed in consideration of margin upon fitting the end portion of the tube material into the grooves of the chucks and consideration of holding force upon the rotation.

According to the typical embodiment of the present invention, for the method of spinning the tube material, the working efficiency can be improved with short processing time, the flexible processed shape can be achieved, and the production efficiency can be improved.

More particularly, the working and processing time is shortened by taking the moving direction of the roller as the radial direction of the raw tube, so that the working efficiency can be improved. Moreover, the spinning without using the mandrel can be achieved, and the detachment from the mandrel or others is unnecessary, so that the production efficiency can be improved. Further, the present invention can achieve the processing or the shaping of the flexible shape including, for example, a shape of a tube material having a larger diameter at a center portion in a rotation-axis direction than those at both sides thereof in accordance with the shape of the roller, and besides, a thickness of the material obtained subsequent to the processing or the shaping is prevented from being decreased or is increased.

In the drawings:
FIG. 1 is a perspective view illustrating a configuration of a tube material, chucks, and a roller in a spinning method and machine according to an embodiment of the present invention;
FIG. 2 is a diagram illustrating an entire configuration of the spinning machine according to the embodiment of the present invention;
FIG. 3A is a cross-sectional view illustrating an outline of a processing state in the spinning method and machine according to the embodiment of the present invention, the processing state being prior to the processing;
FIG. 3B is a cross-sectional view illustrating an outline of a processing state in the spinning method and machine according to the embodiment of the present invention, the processing state being subsequent to the processing;
FIG. 4A is a cross-sectional view illustrating a configuration of chucks which are a tube-end holding tool, which illustrates a Z-X cross-sectional surface of the chuck;
FIG. 4B is a cross-sectional view illustrating the configuration of the chuck which is the tube-end holding tool, which illustrates an enlarged state of a groove;
FIG. 4C is a cross-sectional view illustrating the configuration of the chuck which is the tube-end holding tool, which illustrates a state that an end of the tube material is held by the groove;
FIG. 5A is a perspective view illustrating a configuration of a tube material, which is a view illustrating the tube material whose circumference is continued;
FIG. 5B is a perspective view illustrating a configuration of a tube material, which is a view illustrating the tube material whose circumference is not continued;
FIG. 6A is a plan view illustrating a shape of the tube material, which illustrates a Z-X plane surface prior to shaping;
FIG. 6B is a plan view illustrating the shape of the tube material, which illustrates the Z-X plane surface subsequent to the shaping and a roller;
FIG. 7 is a plan view illustrating a shape of the roller;
FIG. 8 is a cross-sectional view illustrating a rotational configuration of the tube material and the roller at a line a-a of FIG. 3;
FIG. 9 is a diagram of summarized results of a relation of influence on corrugation occurrence and shaping availability due to a ratio (P1/Q1) of a roller width and a distance between chucks in the present spinning method;
FIG. 10A is a diagram illustrating a shape of a roller of a modification example in the present embodiment;
FIG. 10B is a diagram illustrating a shape of a roller of a modification example in the present embodiment;
FIG. 10C is a diagram illustrating a shape of a roller of a modification example in the present embodiment;
FIG. 10D is a diagram illustrating a shape example of a processed product in the present embodiment;
FIG. 10E is a diagram illustrating a shape of a roller of a modification example in the present embodiment;
FIG. 10F is a diagram illustrating a shape example of a processed product in the present embodiment;
FIG. 11A is a cross-sectional view illustrating a processing state in a pressing method of a conventional technique example, the processing state being prior to processing,
FIG. 11B is a cross-sectional view illustrating a processing state in the pressing method of the conventional technique example, the processing state being subsequent to the processing,
FIG. 11C is a cross-sectional view illustrating a processing state in a pressing method of a conventional technique example, which illustrates a plate material subsequent to the processing;
FIG. 12A is a cross-sectional view illustrating an outline of a first example of a spinning method with using a mandrel;
FIG. 12B is another cross-sectional view illustrating the outline of the first example of the spinning method with using the mandrel;
FIG. 13A is a cross-sectional view illustrating an outline of a second example of a spinning method with using a mandrel; and
FIG. 13B is another cross-sectional view illustrating the outline of the second example of the spinning method with using the mandrel.

Hereinafter, a spinning method, a spinning machine, and others according to an embodiment of the present invention will be described in detail based on the drawings. Note that the same components are denoted by the same reference symbol in principle throughout all the drawings for describing the embodiment, and the repetitive description thereof will be omitted.

### [(1) Tube Material, Chucks, Roller]

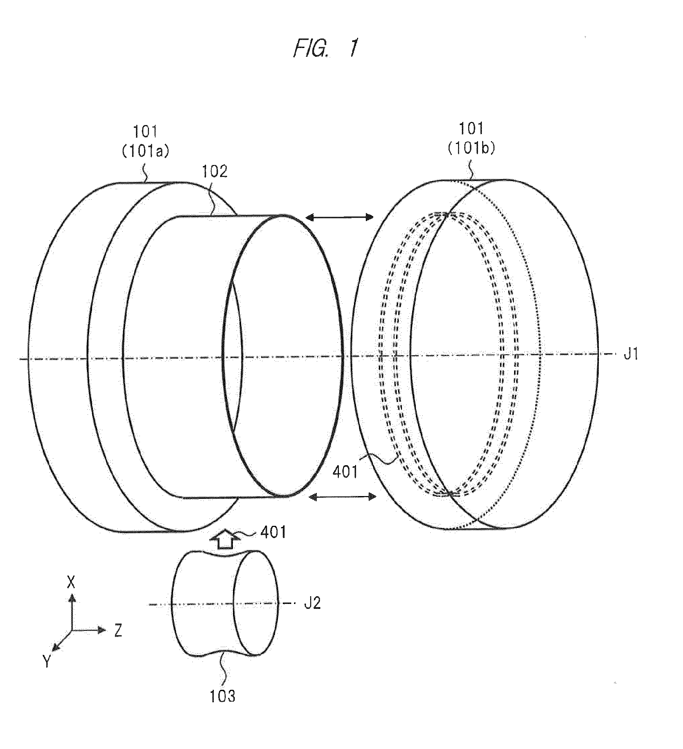

FIG. 1 illustrates a configuration of a tube material 102, chucks 101 which are a tube-end holding tool, and a roller 103 in a spinning method and machine according to the present embodiment. As direction in explanation, "Z" is a rotation-axis direction, and "X" and "Y" are radial directions as illustrated in the drawing.

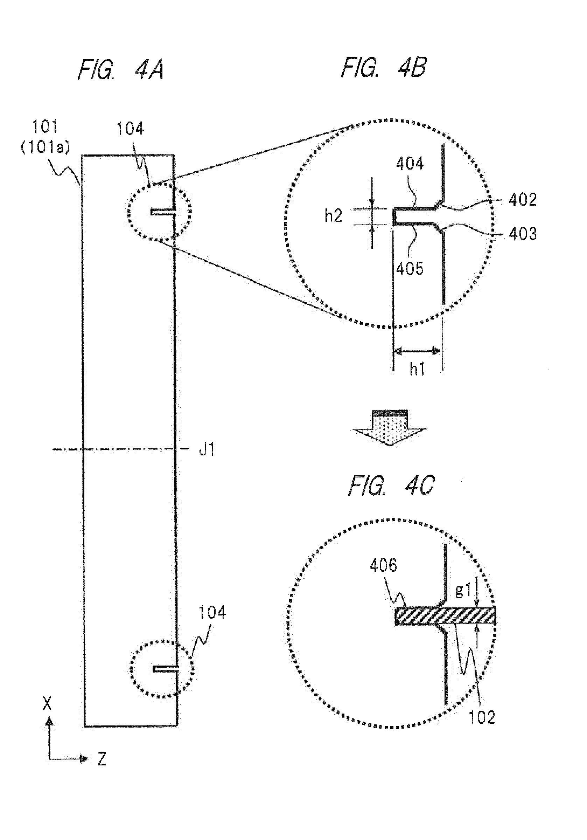

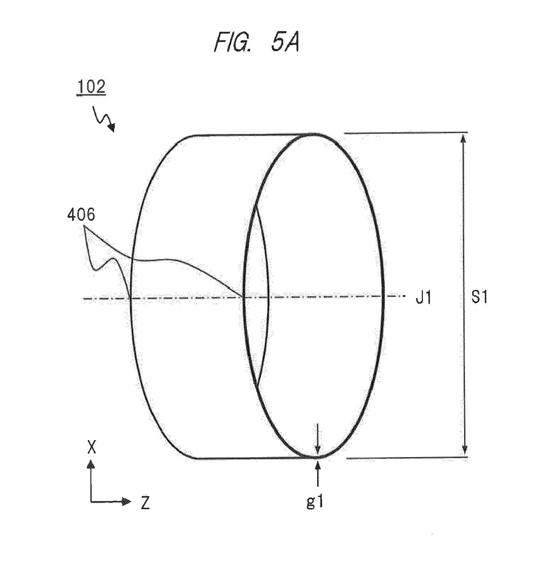

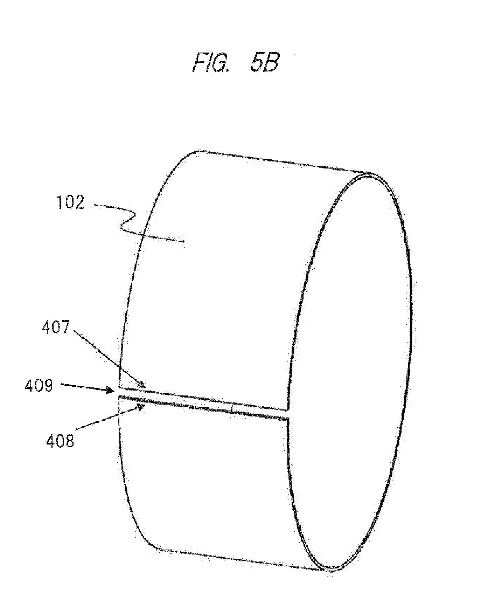

The tube material 102 is a raw tube in other words, such as a hollow cylindrical metal material as also illustrated in FIG. 5 and others. The circumferences at both ends of the tube material 102 is held or restricted by grooves 104 (FIG. 4) of chucks 101.

The pair of tube-end holding tools 101 are chucks for holding or restricting the circumferences at the both ends of the tube material 102, and are made of, for example, columnar or disk-shaped metal. The tube-end holding tools 101 include a portion 101a on one side and a portion 101b on the other side which have similar configurations to each other, which are provided with the respective grooves 104 for entirely holding or restricting the circumferences at the ends of the tube material 102 as described later (FIG. 4). The raw tube 102 is arranged between the pair of chucks 101 (101a and 101b), and the ends thereof are fitted in the grooves 104.

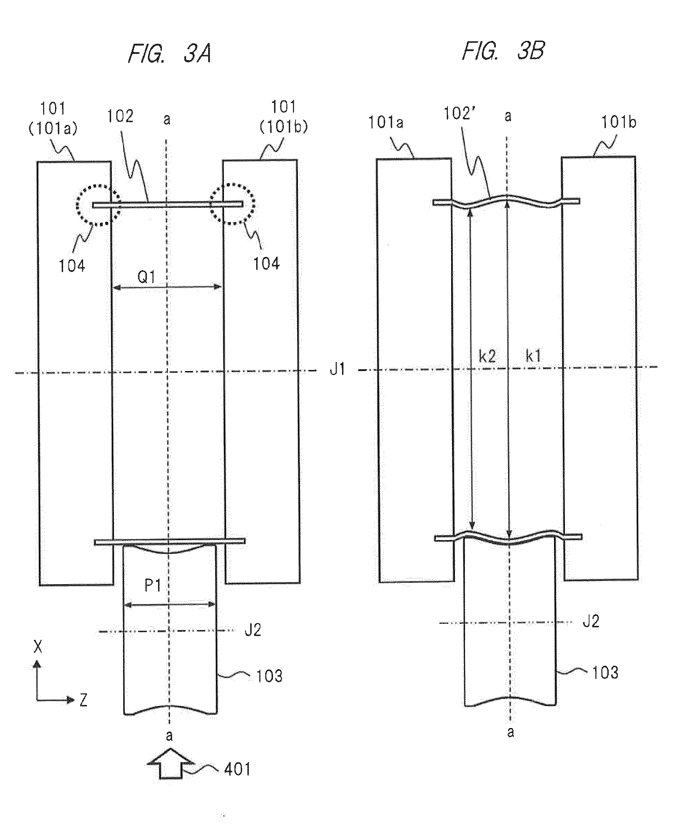

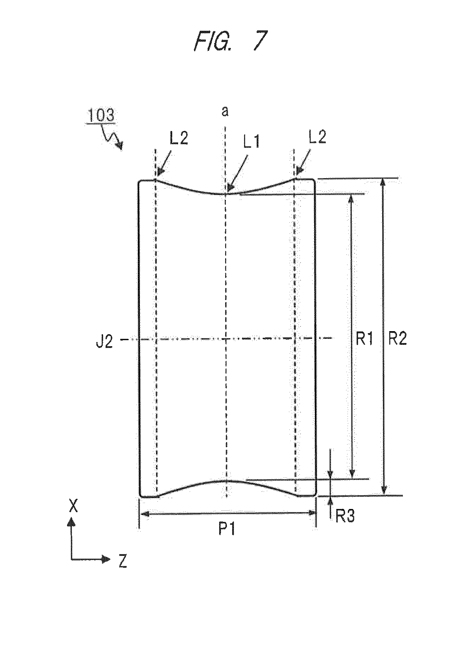

The roller 103 is a shaping roller in other words, and is roughly a columnar rotating symmetrical body, and more specifically has a concave shape as a curved surface of a side surface thereof as illustrated in FIGs. 3, 7, and others.

The tube material 102 and the chucks 101 are rotated around an axis J1. The roller 103 is rotated around an axis J2. Also, the roller 103 is moved in the radial direction (X) of the tube material 102 as illustrated by an arrow 401.

### [(2) Spinning Machine]

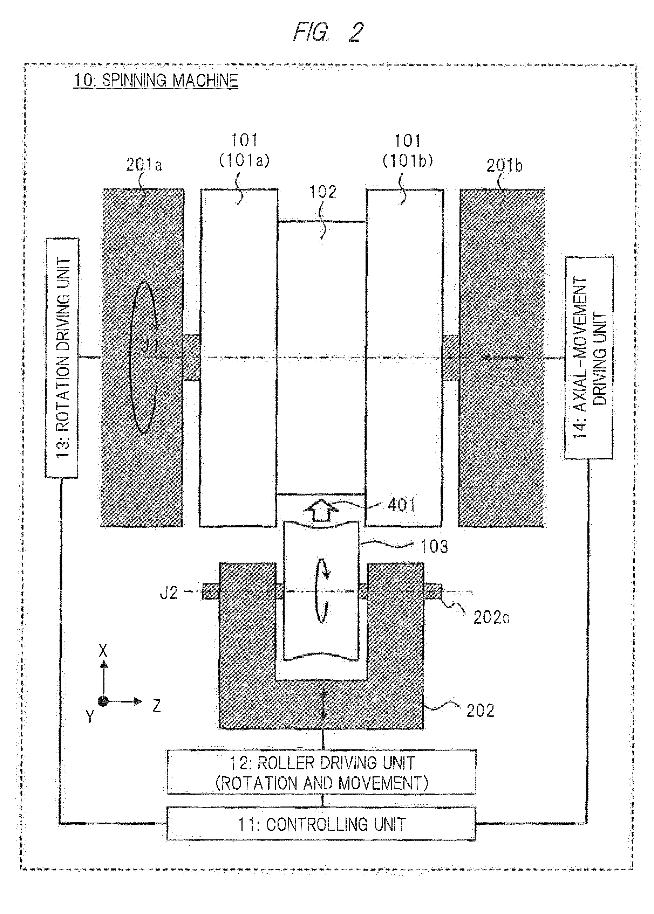

FIG. 2 illustrates an overall configuration of the spinning machine 10 which is a system of the present embodiment in accordance with the spinning method of the present embodiment. As described in detail later, the present spinning machine 10 performs spinning of the tube material 102, drive control of the spinning, and others. The present spinning machine 10 is configured to include: a controlling unit 11; a roller driving unit 12; a rotation driving unit 13; an axial-movement driving unit 14; rotating chucks 201a and 201b; a roller rotating chuck 202; and others, in which the chucks 101 and the raw tube 102 of FIG. 1 are set between the rotating chucks 201a and 201b, and the roller 103 is set at the roller rotating chuck 202. For example, a shaft 202c of the roller rotating chuck 202 is detachable, and the roller 103 whose type depends on a desired shape in the shaping is attachable and detachable.

In the configuration example of FIG. 2, the rotating chuck 201b is configured to be movable in the axial (Z) direction. In this manner, the chucks 101 and the tube material 102 are attachable and detachable between the rotating chucks 201a and 201b. One chuck 101a is fixed to one rotating chuck 201a, and the other chuck 101b is fixed to the other rotating chuck 201b. By the rotating chuck 201a and the rotation driving unit 13, the rotation of the chucks 101 (101a and 101b) and the tube material 102 around the axis J1 is driven.

Also, by the roller driving unit 12 and the roller rotating chuck 202, rotation of the roller 103 around the axis J2 and movement thereof are driven. The movement of the roller 103 includes at least movement in the X direction, and is further configured that it is freely movable in the X, Y, and Z directions, so that more complex processing can be performed.

Upon the processing, the roller 103 is moved in the radial (X) direction of the raw tube 102 as illustrated by the arrow 401 together with the rotation of the roller 103, and is caused to approach to and is pressed against an outer surface of the side surface of the raw tube 102 provided between the chucks 101a and 101b. In this manner, as illustrated in FIG. 3B, a desired shape is formed by transferring the concave shape which is the shape of the side surface of the roller 103 onto the outer surface of the side surface of the raw tube 102.

The controlling unit 11 provides a control command to the roller driving unit 12, the rotation driving unit 13, the axial-movement driving unit 14, or others so as to control their driving. Note that the controlling unit 11 can be configured by a publicly-known technique such as an IC chip or a calculator, and each of the driving units (12, 13, and 14) can be configured by a publicly-known technique such as a motor or others. Each of the rotating chucks (201a, 201b, and 202) can be also configured by a publicly-known technique.

### [(3) Spinning Method]

FIGs. 3A and 3B illustrate outlines of the spinning method of the present embodiment in cross-sectional views. FIG. 3A illustrates the chucks 101, the tube material 102, and the roller 103 in a state prior to the processing, and particularly illustrates a state in which the roller 103 is in contact with the tube material 102. FIG. 3B illustrates a shape/a state of a tube material 102' obtained subsequent to the processing in which the roller 103 has been moved in the radial (X) direction of the tube material 102 and been pushed in.

In FIG. 3A, the raw tube 102 is arranged between the tube-end holding tools 101 (101a and 101b) which are the pair of chucks arranged so as to face each other, and the circumferences at the both ends of the raw tube 102 are entirely fitted in the grooves 104 (FIG. 4) of the respective chucks 101 and are held or restricted by them.

The roller 103 is arranged at a position outside the raw tube 102 on a line a-a between the chucks 101a and 101b. The line a-a represents an intermediate position of the tube material 102 and the roller 103 in Z direction. A symbol "P1" represents a width or a length of the roller 103 in the axial (Z) direction. A symbol "Q1" represents a distance between surfaces of the chucks 101a and 101b facing each other in the axial (Z) direction, in other words, a width of a portion against which the roller 103 can be pressed.

In the present method, spinning which shapes the tube material 102 into a desired shape can be performed so as to change from FIG. 3A to FIG. 3B by moving or feeding the roller 103 in the radial (X) direction of the tube material 102 as illustrated by the arrow 401 together with the rotation drive of the chucks 101, the tube material 102, and the roller 103 and pressing it.

In FIG. 3B, the roller 103 is moved to a predetermined position in the X direction and is pressed against the side surface of the tube material 102', so that the concave shape which is the shape of the side surface of the roller 103 is transferred onto the side surface of the tube material 102'. The shape of the tube material 102' subsequent to the shaping is a rotating symmetrical body around the axis J1. Note that a symbol "k1" represents an inner diameter of the convex portion of the tube material 102' and a symbol "k2" represents an inner diameter of the concave portion thereof obtained subsequent to the processing. In this manner, in the present method, the spinning of the tube material 102, that is, the transferring of the desired shape thereto can be performed without the usage of the mandrel which is the die arranged inside the tube material 102 and without the movement of the roller 103 in the axial (Z) direction of the tube material 102. Moreover, as illustrated in the drawings, the processing can be performed so as to form an outward-convex shape in the vicinity of the line a-a which is the center of the tube material 102' in the axial (Z) direction.

### [(4) Chucks]

FIG. 4A illustrates a cross-sectional surface of the chuck 101a in a Z-X plane (note that the chuck 101b is also similar), and FIG. 4B illustrates the enlarged grooves 104. FIG. 4C illustrates a state in which an end 406 of the tube material 102 is fitted in and held by the grooves 104. The circumferential groove 104 is provided on one side surface of the chuck 101a. The groove 104 can be provided by, for example, grooving a surface of a metal disk by cutting or others.

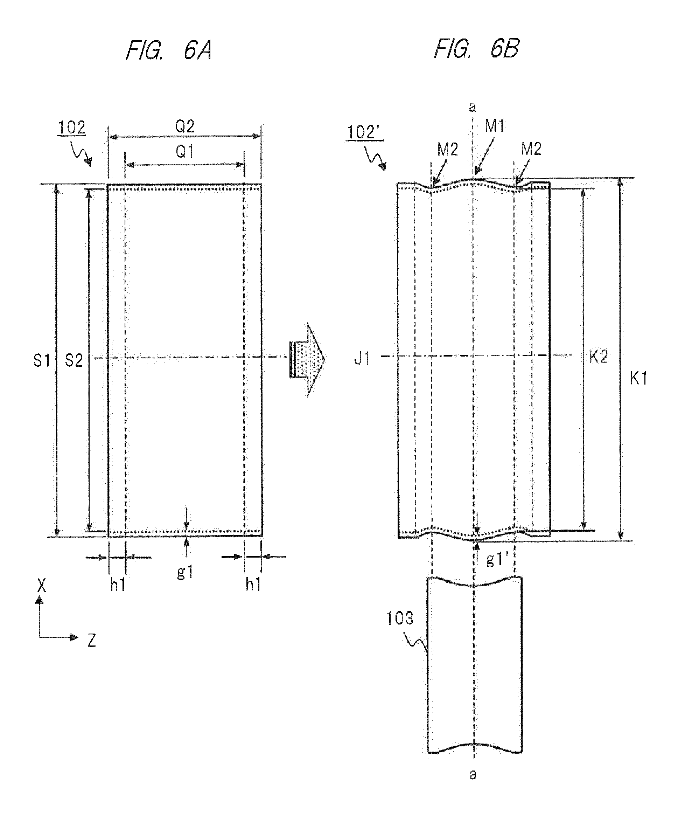

The groove 104 is designed so as to have dimensions, positions, and shapes, which are equal to those of the outer diameter (S1) and the inner diameter (S2) of the raw tube 102 (FIGs. 5 and 6). Note that this designing includes the design of the processing tolerance. A diameter of an outer circumference surface 404 of the groove 104 is equal to S1, a diameter of an inner circumference surface 405 thereof is equal to S2, and a width "h2" of the groove 104 and a thickness "g1" of the tube material 102 are equal to each other (h2 ≅ g1). Note that such designing that the width h2 and the thickness g1 are equal to each other (h2 ≅ g1) includes the processing tolerance. Also, a depth "h1" of the groove 104 is designed so as to match with a length "h1" (FIG. 6 A) of the end 406 of the tube material 102 to be held or fitted therein.

Further, a rounded or tapered portion or others is provided to ends 402 and 403 which are corner portions of the groove 104 on the side surface of the chuck 101 so that the corner portions are smoothed (beveled). Correspondingly, a rounded or tapered portion or others is similarly provided to the both ends 406 which are the circumferences of the tube material 102 (FIG. 5) so that they are smoothed (beveled). In this manner, damage of contact surfaces at these portions (402, 403, and 406) can be protected upon the fitting and holding of the end of the tube material 102 by the grooves 104 of the chuck 101, upon the detachment of the tube material 102 from the chuck 101 subsequent to the shaping, and upon the processing in the holding state. Moreover, by smoothing the corner portions as described above, the working of the fitting and the detachment can be easily performed, and besides, the shaping availability is enhanced.

Also, as the working prior to the processing, the end of the tube material 102 is fitted in and held or restricted by the grooves 104 of the chucks 101. In order to easily perform this working and sufficiently continuously hold the tube material 102 by the chucks 101 upon the processing together with the rotation, the width h2 of the groove 104 and the depth h1 thereof matching with the thickness g1 of the tube material 102 are designed so as to include the processing tolerances. That is, while the relation "h2 ≅ g1" is roughly employed, the tolerance is designed so as to have a relation "h2 = g1 + x" in, for example, consideration of a margin "x" in order to easily perform the fitting of the end 406 into the groove 104, and consideration of the holding or restricting force that prevents the tube material 102 from sliding with respect to the chucks 101 upon the rotation of the chucks 101 and the tube material 102 due to the rotation of the rotating chuck 201a. For example, the tolerance is 10% or less (0.1 mm or less) with respect to a plate thickness 1 mm.

Note that, as another means or modification example for protecting or holding the contact surface of the groove 104 with the end of the tube material 102, a method of sandwiching or interposing a predetermined protecting member or liquid agent between the groove 104 and the end 406 of the tube material 102 may be employed. In this case, the width h2 of the groove 104 or others is designed in consideration of a sandwiched amount. Also, in a case that the protection of the end 406 of the tube material 102 is not required, it is not required to provide the above-described protecting means.

The present method has a configuration that the both ends of the tube material 102 are held by the circumferential grooves 104 in order to hold the tube material 102 by the chucks 101 without using the mandrel, and this configuration does not require the tensile force, the compressing force, or others in the axial direction for holding the both ends of the tube material as different from Patent Document 1 which is a conventional technique example.

### [(5) Tube Material]

FIGs. 5A, 5B, 6A, and 6B illustrate configurations of the tube material 102 which is the raw tube. FIGs. 5A and 5B illustrate perspective configurations of the raw tube 102 obtained prior to the processing, FIG. 6A illustrates a Z-X plane obtained prior to the processing, and FIG. 6B illustrates a Z-X plane of the tube material 102' and the roller 103 obtained subsequent to the processing.

In FIGs. 5A, 5B, and 6A, the cylindrical raw tube 102 is manufactured or prepared by, for example, a publicly-known method such as roll bending, pushing-in, or roll shaping. FIGs. 3 and 4 and others illustrate a state that the ends 406 of the raw tube 102 are fitted in the grooves 104 and are left as they are. Therefore, the tubular raw tube 102 illustrated in FIG. 5A whose circumference is continued by welding or others and the tubular raw tube 102 illustrated in FIG. 5B whose circumference is not continued can be used.

The raw tube 102 illustrated in FIG. 5B has a region 409 whose circumference is not continued at a part of the circumference and which extends lengthwise in the width (Z) direction. In this region 409, an upper portion 407 and a lower portion 408 in the circumferential (X) direction are separated from each other.

The symbol S1 of FIG. 5A is the outer diameter which is the diameter in the radial (X) direction, and the symbol S2 is the inner diameter. At the both ends 406 on the circumferential of the raw tube 102, the portions illustrated as the widths h1 of FIG. 6A are fitted in the above-described grooves 104, and a length Q1 obtained by subtracting the width portions h1 at the both ends from a total length Q2 in the axial (Z) direction is a distance between the above-described chucks 101 (FIG. 3).

One of characteristics of the present method is to perform the spinning without using the mandrel. Therefore, as described above, the grooves 104 which are designed in accordance with the dimensions equal to the outer diameter S1 of the raw tube 102 and the inner diameter S2 thereof are provided on the chucks 101, and the both ends 406 of the raw tube 102 are fitted in the grooves 104 without a space therebetween. In this manner, this is a method in which the ends of the raw tube 102 are held or fixed by the grooves 104 with a sufficient force so that the raw tube 102 is rotated together with the rotation of the chuck 101, and therefore, the detachment of the raw tube 102 or the spinning around of only the chucks 101 because of the rotation does not occur.

In FIG. 6B, as a shape of the tube material 102' obtained subsequent to the shaping by the roller 103 as described above in FIG. 3B, a symbol "K1" represents an outer diameter which is a diameter of the tube material 102 at a most convex portion which is at an intermediate position "M1" in the axial (Z) direction corresponding to the line a-a. A symbol "K2" is an outer diameter which is a diameter of the tube material 102 at most concave portions which are positions "M2" on both sides of the position M1 with the outer diameter K1 in the vicinities of both ends in the axial (Z) direction. The symbols M1 and K1 correspond to a position "L1" of a most concave portion in the shape of the roller 103 in FIG. 7, and the symbols M2 and K2 correspond to positions "L2" of most convex portions thereof. The symbols k1 and k2 in FIG. 3B described above represent the inner diameters corresponding to the symbols K1 and K2.

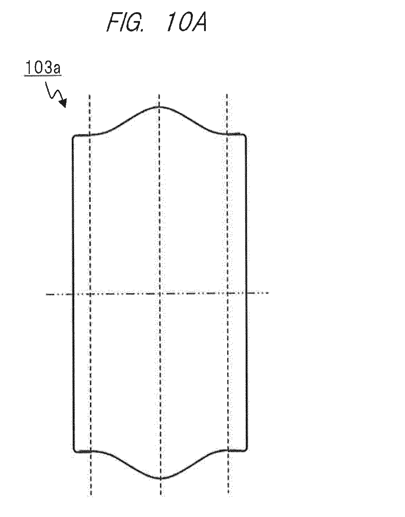

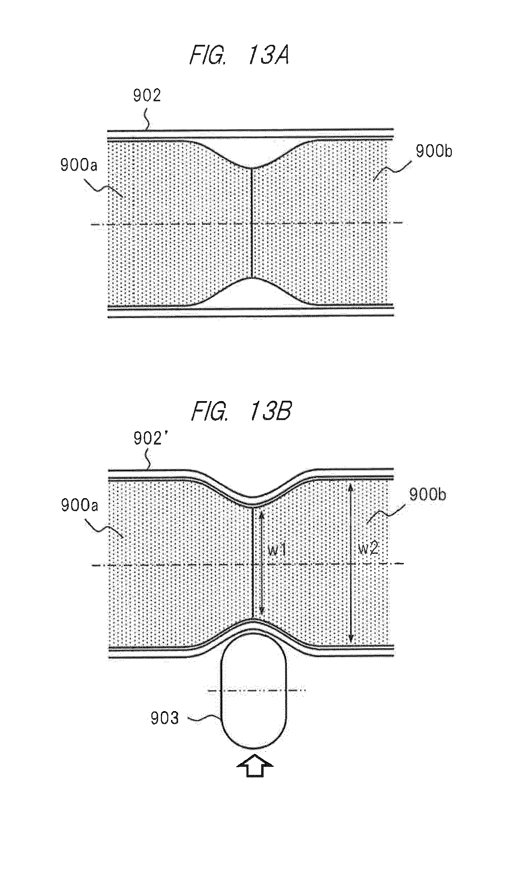

A limitation of a formed shape is large in a case of a spinning method in a conventional method in which the mandrel is arranged inside the raw tube so that the shape of the mandrel and the shape of the roller are transferred to the raw tube between the mandrel and the roller (supplementation in FIGs. 12 and 13 described later) . On the other hand, the method of the present embodiment has such a developed configuration that the spinning without using the mandrel inside the raw tube 102 can be performed, and therefore, it is possible to form such a convex shape that the diameter K1 in the vicinity of the center of the raw tube 102 in the axial (Z) direction is larger than the diameter K2 on the both sides thereof in accordance with the concave shape of the roller 103. Similarly, for example, in a case that the roller 103 has a convex shape (FIG. 10A described later), it is also possible to form such a concave shape that the diameter K1 in the vicinity of the center of the raw tube 102 in the axial (Z) direction is smaller than the diameter K2 on the both ends thereof.

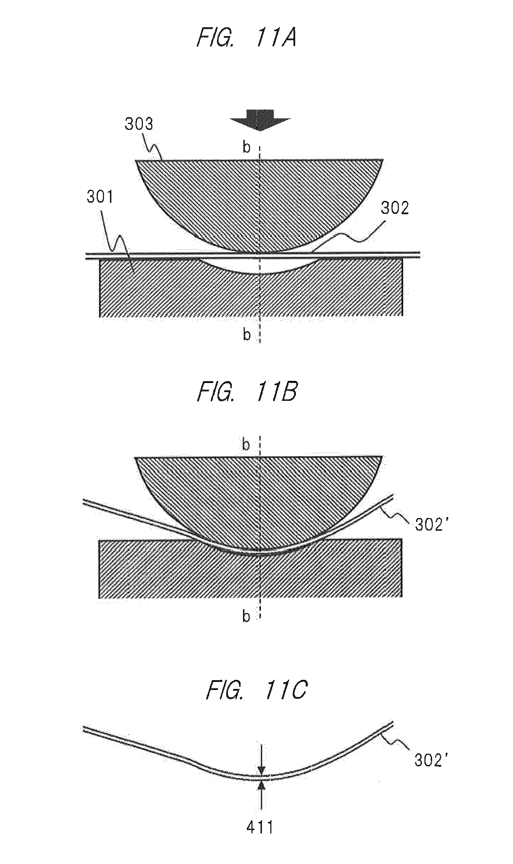

Moreover, in the case of the present method, an effect that a thickness g1' of the tube material 102' obtained subsequent to the shaping at the position M1 on the line a-a is slightly larger than the original thickness g1 in accordance with the shape of the roller 103 is obtained. Although the thickness obtained subsequent to the shaping is decreased in the conventional pressing method (FIG. 11) and the method with using the mandrel inside the tube material, the thickness in the present method is not decreased.

### [(6) Roller]

FIG. 7 illustrates the shape of the roller 103 and the cross-sectional surface thereof on a Z-X plane. A symbol "P1" represents a width or a length of the roller 103 in the axial (Z) direction, a symbol "R1" represents a diameter or a length thereof in the radial (X) direction which is the diameter at the position L1 of the most concave portion at the center in the axial (Z) direction corresponding to the line a-a, and a symbol "R2" represents a diameter at the positions L2 of the most convex portions in the vicinities of the both ends in the axial (Z) direction. A symbol "R3" represents a height or a depth of the concave/convex. The concave shape at the position L1 is transferred to the position M1 of the above-described tube material 102 (FIG. 6) to be the convex shape at the position M1, and the convex shape at the position L2 is transferred to the position M2 of the tube material 102 to be the concave shape at the position M2.

As the shape of the roller 103, the concave, convex, and others based on the diameters (R1 and R2) at the respective positions (L1 and L2) are designed. More particularly, a more complex shape can be also formed by using a roller 103 designed to have a shape having different curvature factors (c1 and c2) from each other at the respective positions (L1 and L2).

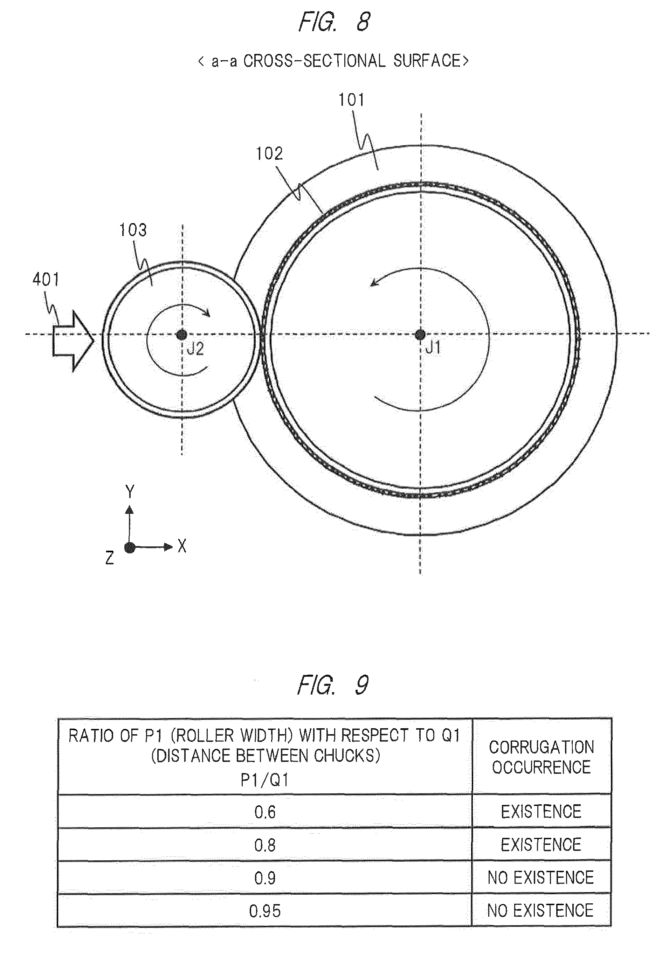

FIG. 8 illustrates a configuration of the rotation of the tube material 102 and the roller 103 on the cross-sectional surface taken along the line a-a of FIG. 3. The chucks 101 and the tube material 102 are rotated around the axis J1, and the roller 103 is rotated around the axis J2. The roller 103 positioned outside the rotating raw tube 102 is moved in the radial (X) direction of the raw tube 102 as illustrated by the arrow of 401 while rotating, and the concave/convex shape of the above-described roller 103 (FIG. 7) is transferred to the side-surface portion of the raw tube 102, so that the shaping can be performed.

Note that the chucks 101 are not limited to have the column or disk shape, but can have a hollow cylindrical or ring shape or others.

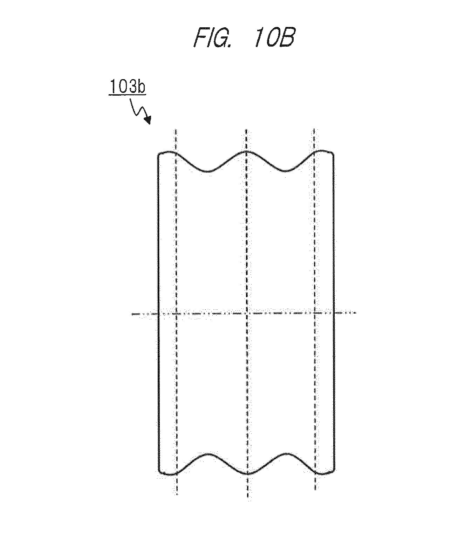

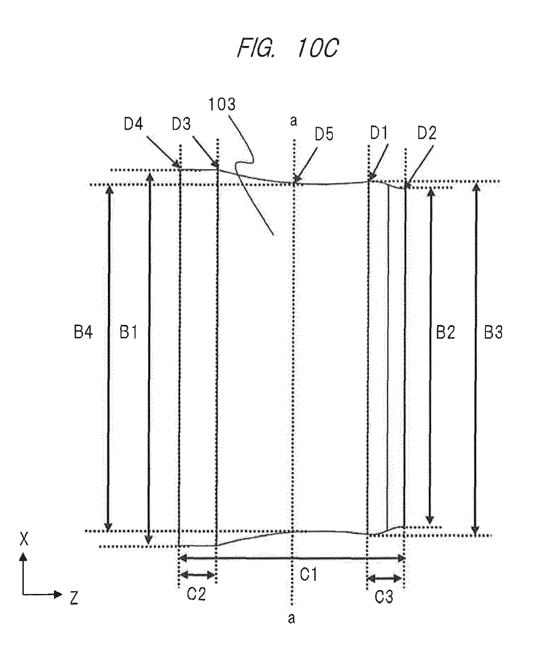

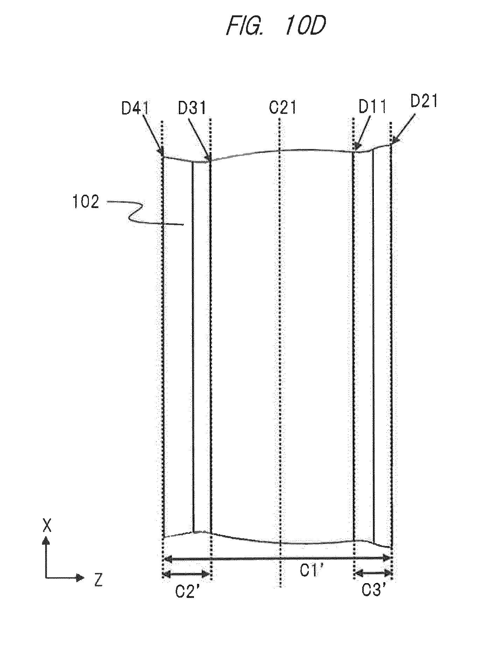

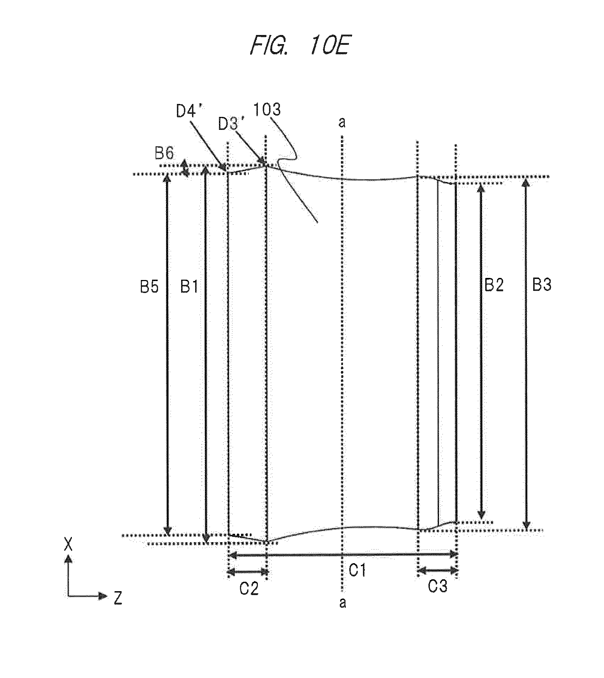

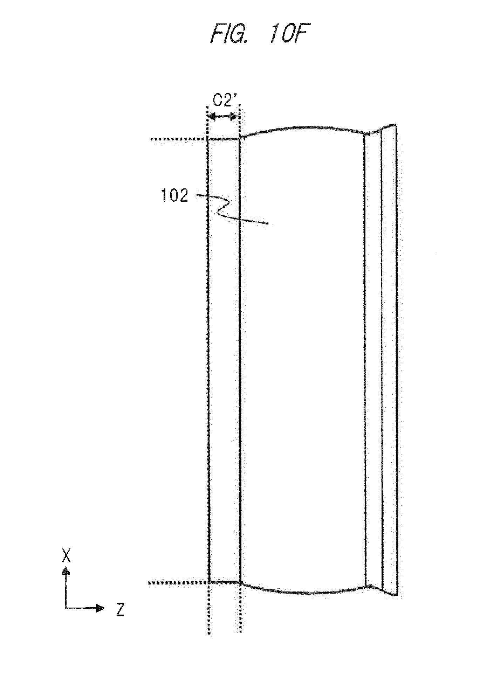

Note that one roller 103 having a predetermined shape is described in the present embodiment. However, the number of rollers is not limited to this, and a plurality of rollers 103 may be used in combination. For example, a plurality of rollers 103 having the same shape may be prepared, and these rollers 103 may be pressed at the same time from respective directions in periphery of the tube material 102. Also, a plurality of types of rollers 103 designed to have different shapes from each other may be prepared and be used separately in accordance with a shape of the tube material 102' or a product to be targeted. A modification example of the shape of the roller 103 will be described later (FIG. 10).

### [(7) Dimension]

FIG. 9 illustrates results of influence on corrugation occurrence and shaping availability due to a ratio (P1/Q1) of a width P1 of the roller 103 and a distance Q1 between the chucks 101 described above (in FIG. 3) in the present spinning method and machine, the results being studied by finite element analysis. Depending on the value of P1/Q1 which is the ratio of the width P1 of the roller 103 with respect to the length Q1 between the chucks 101 (101a and 101b), for example, presence/absence of the occurrence of the corrugation such as undesired concave/convex is affected.

As a result of the study, when the value of P1/Q1 is smaller than 0.9 such as 0.6 or 0.8, the corrugation occurs on the processed surface of the tube material 102, and the shape of the roller 103 cannot be correctly or accurately transferred to the raw tube 102, and therefore, effective shaping cannot be performed. When the value of P1/Q1 is in a range larger than 0.9 but smaller than 1.0 such as 0.9 or 0.95, the corrugation does not occur on the processed surface, and the shape of the roller 103 can be correctly or accurately transferred to the raw tube 102, and therefore, the effective shaping can be achieved. In consideration of the above-described results, a design mode of a dimension, a shape, and others of each portion is preferably made so that the value of P1/Q1 is in the range larger than 0.9 but smaller than 1.0.

### [Working Procedure]

An example of a working procedure upon the processing in the present spinning method and machine (FIG. 2) will be described as follows.
(1) As illustrated in FIG. 2, the chucks 101 and the tube material 102 are attached to the rotating chucks 201a and 201b. More particularly, one chuck 101a is attached to the rotating chuck 201a, and the end 406 of the tube material 102 is attached to the groove 104 of the chuck 101a as illustrated in FIG. 1. Also, the other chuck 101b is attached to the other rotating chuck 201b. The rotating chuck 201b is driven by the axial-movement driving unit 14 so as to move in the axial (Z) direction, so that the groove 104 of the chuck 101b and the other end 406 of the tube material 102 are connected to each other. In this manner, as illustrated in FIG. 3A, the tube material 102 is set or fitted in the grooves 104 of the chucks 101, and the tube material 102 is held or restricted.
(2) The roller 103 whose type corresponds to a desired shape is attached to the roller rotating chuck 202. They are arranged so that the centers of the raw tube 102 and the roller 103 in the axial (Z) direction are on the line a-a.
(3) By processing start by an operation of an operator, a NC program input, or others, a control command is issued from the controlling unit 11 to each of the units (12, 13, and 14). The roller rotating chuck 202 is driven by the roller driving unit 12 so as to rotate the roller 103. The rotating chuck 201a is driven by the rotation driving unit 13 so as to rotate the chucks 101 and the tube material 102.
(4) The roller rotating chuck 202 is driven by the roller driving unit 12 so as to move or feed the roller 103 in the X direction, press the roller 103 against the outer side surface of the raw tube 102 as illustrated in FIG. 3A, and push the roller to a predetermined position as illustrated in FIG. 3B, so that the raw tube 102 is shaped into a desired shape.
(5) Subsequent to the shaping of the above-described desired shape, the roller 103 is returned to an original position, the rotation of each unit is stopped, and the tube material 102' obtained subsequent to the processing is detached from the present machine.

### [Modification Examples]

FIGs. 10A and 10B illustrate modification examples of the roller 103. A roller 103a of FIG. 10A is a case having a convex shape. The tube material 102' can be shaped into a concave shape by the roller 103a of FIG. 10A. The roller 103b of FIG. 10B is a case having two concave shapes parallely provided in the axial (Z) direction which are a wave shape having a convex shape at a center. The tube material 102' can be shaped into two parallely convex shapes by the roller 103b of FIG. 10B.

FIG. 10C illustrate a shape of another modification example of the roller 103. FIG. 10D illustrates a shape example of the raw tube 102 which is a processed product by the roller 103 of FIG. 10C. FIG. 10E illustrate a shape of still another modification example of the roller 103. FIG. 10F illustrates a shape example of the raw tube 102 which is a processed product by the roller 103 of FIG. 10E.

The roller 103 usable in the present embodiment is not limited to have the symmetrical shape whose right and left shapes are the same as each other with respect to the line a-a serving as the center position in the axial (Z) direction as illustrated in above-described FIG. 3, but can be an asymmetrical shape whose right and left shapes are different from each other with respect to the line a-a.

For example, the roller 103 illustrated in FIG. 10C has the asymmetrical shape whose right and left shapes are different from each other with respect to the line a-a. A diameter thereof at a position "D5" in the axial (Z) direction corresponding to the line a-a is denoted by a symbol "B4". In the right-side shape thereof with respect to the line a-a, a diameter at a position "D1" in the axial (Z) direction is denoted by a symbol "B3". Also, a diameter at a position "D2" in the axial (Z) direction which is a right-side end is denoted by a symbol "B2". In the left-side shape thereof with respect to the line a-a, a diameter at a position "D3" in the axial (Z) direction is denoted by a symbol "B1". Also, a diameter at a position "D4" in the axial (Z) direction which is a left-side end is also denoted by a symbol "B1". The diameter B2 is smaller than the diameter B1 and the diameter B3. The diameter B4 is smaller than the diameter B1.

Each of symbols "C1", "C2" , and "C3" represents a width from/to or a distance between the above-described portions in the Z direction. The symbol C1 represents the width or distance from the position D4 which is one end to the position D2 which is the other end. The symbol C2 represents the width or distance from the position D4 to the position D3. The symbol C3 represents the width or distance from the position D1 to the position D2.

The positions D1, D2, D3, and D4 in the roller 103 of FIG. 10C are transferred correspondingly to positions "D11", "D21", "D31", and "D41" in side-surface portions of the raw tube 102 of FIG. 10D. In this manner, the raw tube 102 of FIG. 10D can be shaped into a shape whose right and left shapes are asymmetric with respect to a position "C21". Note that symbols "C1'", "C2'", and "C3'" of FIG. 10D represent widths or distances obtained subsequent to the shaping, corresponding to the symbols C1, C2, and C3 of FIG. 10C.

Also, the roller 103 having the shape illustrated in FIG. 10E can form a linear portion illustrated by a symbol C2' in the axial (Z) direction of the raw tube 102 of FIG. 10F. The roller 103 of FIG. 10E has a tapered portion having a tapered shape in which the width B1 is decreased to the width B5 from the position D3' to the position D4' in the portion C2 in the axial (Z) direction. In the portion C2, the roller 103 of FIG. 10E has a tapered portion having a tapered shape in which a diameter of the width B5 serving as a narrow portion corresponding to the position D4' is smaller than a diameter of the width B1 serving as a wide portion corresponding to the position D3'. A difference between the width B1 and the width B5 is a width "B6".

By providing the above-described tapered portion in the roller 103, the raw tube 102 is swelled when the raw tube 102 is processed by the roller 103, so that the straight portion denoted by C2' in FIG. 10F is formed. In the linear portion denoted by C2', the diameters in the X direction are equal to each other.

When the linear portion denoted by C2' is formed in the raw tube 102 of FIG. 10F, in the width of the portion C2 of the roller 103 of FIG. 10E in the axial (Z) direction with respect to C1 which is the total length of the roller 103 in the axial (Z) direction, it is desired that a ratio "C2/C1" of C1 occupied by C2 is larger than 0.04 but smaller than 0.2. In this manner, the linear portion denoted by C2' of FIG. 10F is successfully formed.

Also, the tapered shape of the tapered portion of the above-described roller 103 which is particularly preferred to the above-described successful formation of the linear portion is a shape having a ratio "B1/B5" which is a ratio of the widths in the X direction, that is, a ratio of the wide portion and the narrow portion is larger than 1 but smaller than 1.03.

### [Effect and Others]

As explained above, the spinning method of the present embodiment is a transferring method by moving the roller 103 having the predetermined shape in the radial (X) direction of the tube material 102 while pressing against the tube material 102 without the mandrel by holding the both ends of the tube material 102 by the grooves 104 of the pair of chucks 101. The spinning can be performed without using the mandrel, and therefore, a step and a working of mounting the mandrel or others to be performed prior/subsequent to the processing are eliminated, so that workability and working efficiency are improved. Also, by taking the moving direction of the roller 103 as the radial (X) direction of the raw tube 102, the processing time can be shortened, and the production efficiency can be improved. Further, in accordance with the shape of the roller 103, such a flexible formed shape as the concave shape or the convex shape in the vicinity of the center of the tube material 102 in the axial (Z) direction can be achieved, so that a degree of freedom is high.

In comparison with a conventional method, for example, when a complex shape is processed by a pressing method as illustrated in FIGs. 11A to 11C, a thickness thereof obtained subsequent to the processing is decreased. FIG. 11A is a cross-sectional surface obtained prior to the pressing, and FIG. 11B is a cross-sectional surface obtained subsequent to the pressing. A symbol 301 represents a press die which is a base having a concave portion, a symbol 302 represents a plate material which is a processing target and a material prior to the processing, and a symbol 303 represents a press punch having a convex shape. FIG. 11C is a cross-sectional surface of a plate material 302' obtained subsequent to the pressing of FIG. 11B. More particularly, in FIGs. 11B and 11C, the thickness of the plate material 302' obtained subsequent to the processing is largely decreased in a portion having such a large deformation amount as a plate thickness obtained subsequent to the press shaping which is a thickness portion denoted by a symbol 411 on a line b-b. On the other hand, the method of the present embodiment is a method in which the deformation is performed in the radial direction of the raw tube 102 without using the mandrel, and besides, in which the both ends 406 of the tube material are restricted, and therefore, the tube material is deformed so as not to stretch in the Z direction of FIG. 6 which is the longitudinal direction but to shrink in the radial direction, and the deformed portion is shifted in the plate thickness direction, so that the above-described thickness g1 is prevented from being decreased or is increased.

### [Supplement]

As a supplement, FIGs. 12A and 12B illustrate a case as a spinning method of a conventional example in which a convex shape is formed in the radial direction of a tube material 902 by arranging a mandrel 900 having a convex shape inside the cylindrical tube material 902 and performing spinning (or one called "hera shibori" in Japanese) while pressing a roller 903 (or one called "hera" in Japanese) from outside of the tube material 902. A diameter "v1" of the convex portion is larger than a diameter "v2" of the other portion. In consideration of such a method, the tube material 902' obtained subsequent to the shaping is formed into a shape transferred from the mandrel 900, and therefore, cannot be detached from the mandrel 900, or cutting of the tube material 902' obtained subsequent to the shaping or others is required.

Similarly, FIGs. 13A and 13B illustrate a case as another conventional example in which a concave shape is formed in the tube material 902 by arranging a mandrel having a concave shape formed inside the tube material 902 as an integrated object therewith and performing the spinning while pressing the roller 903 from outside of the tube material 902. In this case, a diameter "w1" of the concave portion is smaller than a diameter "w2" of the other portion. Therefore, also in such a method, as similar to the case of FIGs. 12A and 12B, the tube material 902' obtained subsequent to the shaping cannot be detached from the mandrel, and therefore, it is generally required to arrange divided mandrels 900a and 900b inside the tube material 902 as illustrated in FIGs. 13A and 13B, perform the shaping, and then, detach each of the mandrels 900a and 900b. A line between the mandrels 900a and 900b in FIGs. 13A and 13B represents a dividing surface between the mandrels.

In consideration of the methods as the above-described examples in order to form a tubular component having a convex shape or a concave shape in a radial direction or continuously forming convex shapes and concave shapes, it is difficult to detach the mandrel inside the tube material, or it is required to perform the processing partially and separately. In other words, the efficiency is bad because the formation cannot be collectively performed at once or because of others, and the limitation of the formed shape is large.

In the foregoing, the invention made by the inventors has been concretely described based on the embodiments. However, it is needless to say that the present invention is not limited to the foregoing embodiments and various modifications and alterations can be made within the scope of the present invention.

The present invention can be utilized for a technique of manufacturing a tubular component and others.

## Claims

1. A spinning method using elements including: a tube material; a pair of chucks which hold and rotate both ends of the tube material; and a roller which is a rotating symmetrical body having a predetermined curved shape on a side surface thereof in order to shape the tube material,
in a state that circumferential portions at the both ends of the tube material are fitted in and held by circumferential grooves provided on side surfaces of the pair of chucks facing each other, respectively,
when the chucks holding the tube material are rotated around a first axis, the roller is rotated around a second axis, axial directions of the rotation around the first axis and the rotation around the second axis are the same as each other in a first direction, and a radial direction the rotation is a second direction,
the method comprising a step of transferring a curved shape of a side surface of the roller to a side surface of the tube material by moving the rotating roller in the second direction and pressing, from outside, the side surface of the roller against the side surface of the rotating tube material between the rotating chucks.

2. The spinning method according to claim 1,
wherein, in the first direction, when a width of the side surface of the roller is denoted by P1 and a distance between the side surfaces of the pair of chucks facing each other where the side surface of the tube material exists is denoted by Q1, a value of P1/Q1 which is a ratio between them is larger than 0.9 but smaller than 1.0.

3. The spinning method according to claim 1,
wherein a shape of the side surface of the roller is a curved shape which is concaved in the second direction at a center in the first direction, and,
as a shape of the tube material obtained subsequent to the shaping, a portion having a curved shape which is convex in the second direction is shaped.

4. The spinning method according to claim 1,
wherein a shape of the side surface of the roller is a curved shape which is convex in the second direction at a center in the first direction, and,
as a shape of the tube material obtained subsequent to the shaping, a portion having a curved shape which is concaved in the second direction is shaped.

5. The spinning method according to claim 1,
wherein each width of the grooves provided on the side surfaces of the chucks is designed so as to have a length obtained by addition of a thickness of the end of the tube material and a processing tolerance, and
the processing tolerance is designed in consideration of a margin upon fitting of the end of the tube material into the grooves of the chucks and consideration of a holding force upon the rotation.

6. A spinning machine comprising:
a tube material;
a pair of chucks which hold and rotate both ends of the tube material;
a roller which is a rotating symmetrical body having a predetermined curved shape on a side surface thereof in order to shape the tube material;
a first driving unit which rotates the pair of chucks;
a second driving unit which rotates and moves the roller; and
a controlling unit which controls the first driving unit and the second driving unit,
the machine being configured to fit and hold circumferential portions at the both ends of the tube material into and by circumferential grooves provided on side surfaces of the pair of chucks facing each other, respectively, and,
when the chucks holding the tube material are rotated around a first axis, the roller is rotated around a second axis, axial directions of the rotation around the first axis and the rotation around the second axis are the same as each other in a first direction, and a radial direction of the rotation is a second direction,
a curved shape of a side surface of the roller being transferred to a side surface of the tube material by moving the rotating roller in the second direction and pressing, from outside, the side surface of the roller against the side surface of the rotating tube material between the rotating chucks.

7. The spinning machine according to claim 6,
wherein, in the first direction, when a width of the side surface of the roller is denoted by P1 and a distance between the side surfaces of the pair of chucks facing each other where the side surface of the tube material exists is denoted by Q1, a value of P1/Q1 which is a ratio between them is larger than 0.9 but smaller than 1.0.

8. The spinning machine according to claim 6,
wherein a shape of the side surface of the roller is a curved shape which is concaved in the second direction at a center in the first direction, and,
as a shape of the tube material obtained subsequent to the shaping, a portion having a curved shape which is convex in the second direction is shaped.

9. The spinning machine according to claim 6,
wherein a shape of the side surface of the roller is a curved shape which is convex in the second direction at a center in the first direction, and,
as a shape of the tube material obtained subsequent to the shaping, a portion having a curved shape which is concaved in the second direction is shaped.

10. The spinning machine according to claim 6,
wherein a shape of the side surface of the roller is asymmetric with respect to a center in the first direction or a first position so that a shape and a diameter of the roller on a left side and a shape and a diameter of the roller on a right side are different from each other, and,
as a shape of the tube material obtained subsequent to the shaping, with respect to the center in the first direction or the first position, the shape of the roller on the left side is transferred to a left side of the tube material, and the shape of the roller on the right side is transferred to a right side of the tube material, so that the shape of the tube material on the left side and the shape thereof on the right side are different from each other.

11. The spinning machine according to claim 6,
wherein the roller has a tapered portion having a tapered shape,
the tapered shape of the tapered portion is a shape having a ratio of a wide portion and a narrow portion in the second direction which is larger than 1.00 but smaller than 1.03, and is a shape having a ratio of the tapered portion occupying a total length of the roller in the first direction which is larger than 0.04 but smaller than 0.2, and,
as the shape of the tube material obtained subsequent to the shaping, a linear portion in the first direction is shaped in the tube material by the tapered portion of the roller.

12. The spinning machine according to claim 6,
wherein the tube material is a tube material whose circumference is continued or a tube material whose circumference is not continued and is divided in the second direction into an upper portion and a lower portion in a region extending in the first direction in which the circumference is not continued.

13. The spinning machine according to claim 6,
wherein each width of the grooves provided on the side surfaces of the chucks is designed so as to have a length obtained by addition of a thickness of the end of the tube material and a processing tolerance, and
the processing tolerance is designed in consideration of a margin upon fitting of the end of the tube material into the grooves of the chucks and consideration of a holding force upon the rotation.

14. A shaped component which is shaped by the spinning machine according to claim 8 and is a rotating symmetrical body obtained subsequent to the shaping of the tube material,
a thickness of a convex portion on a side surface of the shaped component to which a concave portion of the roller is transferred is equal to or larger than a thickness thereof obtained prior to the shaping.
